# EUROPEAN PATENT SPECIFICATION

(11) **EP 3 477 834 B1**
(45) Date of publication and mention of the grant of the patent: **14.10.2026**
(21) Application number: 16906255.1
(22) Date of filing: 22.06.2016
(51) Int. Cl.: H02M 1/00, H02M 1/32, H02M 7/48

(54) **POWER CONVERSION DEVICE**
STROMWANDLUNGSVORRICHTUNG
DISPOSITIF DE CONVERSION DE PUISSANCE

(43) Date of publication of application: 01.05.2019
(73) Proprietor: Hitachi Industrial Equipment Systems Co., Ltd., Tokyo 101-0022 (JP)
(72) Inventor: EJIMA, Shingo, Tokyo 101-0022 (JP); TANABE, Keisuke, Tokyo 101-0022 (JP); ARAO, Yusuke, Tokyo 101-0022 (JP); KAZUSA, Hiroyuki, Narashino-shi Chiba 275-0001 (JP)
(74) Representative: MERH-IP Matias Erny Reichl Hoffmann Patentanwälte PartG mbB
(86) International application number: PCT/JP2016/068455
(87) International publication number: WO 2017/221338

(56) References cited:
- EP-A1- 3 133 732
- WO-A1-2015/159376
- WO-A1-2016/021329
- JP-A- 2005 168 220
- JP-A- 2007 267 537
- JP-A- 2016 066 974
- JP-A- H02 211 064
- JP-A- H02 211 064
- US-A1- 2017 207 722

## Description

### Technical Field

The present invention relates to a power conversion device.

### Background Art

As background art in the technical field relevant to the present invention, there is a publication, Japanese Patent Application Laid-Open No. Hei 11-272307. In this publication, descriptions are provided as follows: "Stop a servo motor and test a user program using a servo motor load simulator on a drive. This prevents the breakdown of the load attributed bugs in the user program." (Refer to Abstract).

### Citation List

### Patent Literature

PTL 1: Japanese Patent Application Laid-Open No. Hei 11-272307

### Summary of Invention

### Technical Problem

In PTL 1, a method for preventing the breakdown of the load attributed to bugs in a user program is described; in particular, a load simulator of a servo motor that is a real built-in load is used and the user program is debugged with the servo motor being deactivated.

If this method is applied to a case of checking operation of a system in which a power conversion device for general purpose use was incorporated, it is difficult to create a load simulator, since an AC electric motor and a load are subject to change depending on a user system.

In addition, in designing a board that employs a power conversion device and a motor, there may be a separation between an electrical design for a PLC or the like to send and receive an electric signal to/from the power conversion device and a relay among others and a mechanical design for, inter alia, an AC electric motor and a load. In this case, the AC electric motor and the load may often be undetermined in a phase of creating the electric design.

Meanwhile, even when an AC electric motor and a load are unprepared, a user may want to check to see if an electrical design part operates normally. But, such checking is not possible with the prior art that is a system based on a prerequisite that system components such as an AC electric motor and a load are determined or have already been prepared.

In addition, even in a case where an AC electric motor and a load have been prepared, if, for example, a function of overload protection or the like of the AC electric motor is implemented by an external device, it is conventionally required to drive the AC electric motor actually and verify that the overload protection of the AC electric motor works normally. But, if the overload protection implemented by the external device involves bugs, there is a possibility that an operation unintended by a user takes place when testing for verification is executed, while driving the AC electric motor actually. Consequently, in the event that equipment failure or the like should occur, it takes time to, inter alia, re-execute testing for verification and repair the equipment and, therefore, testing for verification is liable to consume a lot of time.

In addition, to make an AC electric motor and a load operate, a high voltage and a large current are needed and the execution may be impossible from a safety standpoint or because of limitation of facilities for evaluation.

In addition, likewise, if bugs are involved in set parameters and a user program of a power conversion device, there is a possibility that an operation unintended by a user takes place when the AC motor and its load are being driven actually. Consequently, in the event that equipment failure or the like should occur, it takes time to, inter alia, re-execute testing for verification and repair the equipment and, therefore, testing for verification is liable to consume a lot of time.

In consideration of the circumstances noted above, the present invention is intended to provide a method for testing for verification of a user system even in a case where an AC electric motor and a load are unprepared or without driving the AC electric motor even if those are prepared. Further power conversion devices with which a simulation testing of the electrical part can be done are known from JP H02 211064 A and WO 2015/159376 A1. WO 2016/021329 A1 relates to a further power conversion device which addresses the problem of testing an overcurrent protection circuit and simulating overcurrent. This document does not show that a simulation circuit can be used for overcurrent or overheat or overvoltage testing.

### Solution to Problem

Representative aspects of the invention disclosed herein are outlined and summarized as below.

In particular, it is provided a power conversion device having the features defined in claim 1. Further preferred embodiments are defined in the dependent claims.

According to the present invention, it is possible to carry out testing for verification of a user system even in a case where an AC electric motor and a load are unprepared or without driving the AC electric motor even if those are prepared.

Problems, configurations, and advantageous effects other than described above will be apparent from the following description of embodiments.

### Brief Description of Drawings

Figure 1 is an example of a configuration diagram of a power conversion device in Example 1.
Figure 2 is a configuration diagram featuring an internal structure of a simulation unit in Example 1 for a case where current information is not converted.
Figure 3 is a configuration diagram featuring the internal structure of the simulation unit in Example 1 for a case where current information is allowed to be changed from outside.
Figure 4 is an example of a system in which an operating frequency directive is changed using current information from the power conversion device in Example 1.
Figure 5 is a configuration diagram featuring the internal structure of the simulation unit in Example 2 for a case where temperature information is not converted.
Figure 6 is a configuration diagram featuring the internal structure of the simulation unit in Example 2 for a case where temperature information is allowed to be changed from outside.
Figure 7 is an example of a system in which an operating frequency directive is changed using temperature information from the power conversion device in Example 2.
Figure 8 is a configuration diagram featuring the internal structure of the simulation unit in Example 3 for a case where DC voltage information is not converted.
Figure 9 is a configuration diagram featuring the internal structure of the simulation unit in Example 3 for a case where DC voltage information is allowed to be changed from outside.
Figure 10 is an example of a system in which a deceleration directive is changed using voltage information from the power conversion device.

### Description of Embodiments

In the following, embodiment examples of the invention will be described with the aid of the drawings.

### Example 1

In the present Example, an example of operation of an integrated system into a power conversion device is described.

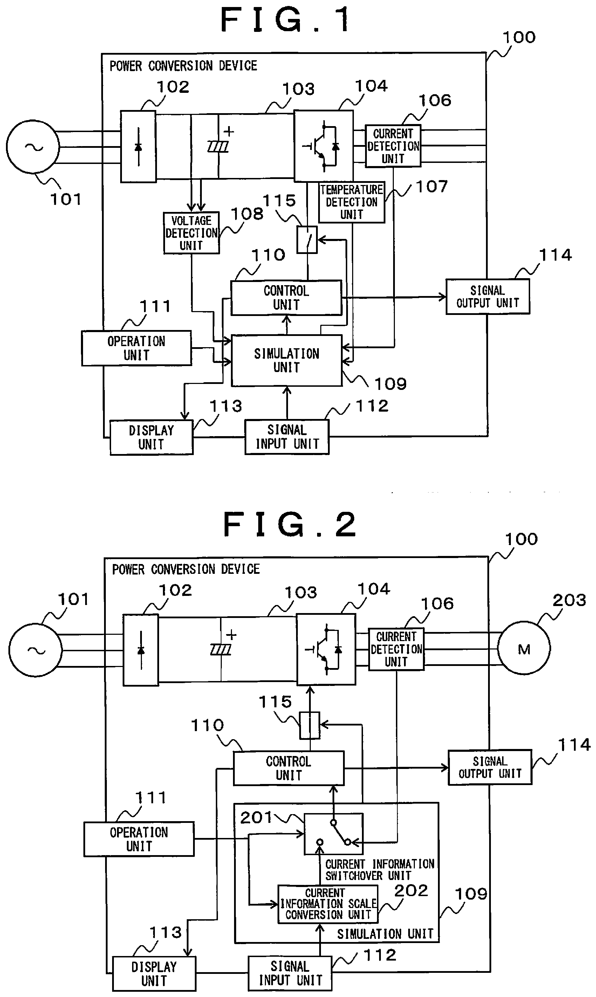

Fig. 1 is an example of a configuration diagram of a power conversion device 100 of the present Example.

In the present Example, the power conversion device includes a three-phase AC power supply 101, a DC conversion unit 102, a smoothing capacitor 103, an AC conversion unit 104, a current detection unit 106, a temperature detection unit 107, a voltage detection unit 108, a simulation unit 109, a control unit 110, an operational unit 111, a signal input unit 112, a display unit 113, a signal output unit 114, and a switch unit 115.

The three-phase AC power supply 101 is, for example, a three-phase AC voltage which is supplied from an electric power company or an AC voltage which is supplied from a generator and outputs the supply voltage to the DC conversion unit 102. The three-phase AC power supply 101 may be a single-phase AC power supply for a power conversion device that can receive single-phase AC input.

The DC conversion unit 102 is configured, for example, as a DC conversion circuit formed with a diode or a DC conversion circuit using an IGBT and a flywheel diode and it converts an AC voltage input to it from the three-phase AC power supply 101 to a DC voltage and outputs the DC voltage to the smoothing capacitor. In Fig. 1, the DC conversion unit formed with a diode is depicted.

The smoothing capacitor 103 smoothes a DC voltage input to it from the DC conversion unit 102 and outputs the DC voltage to the AC conversion unit 104. As for input to the smoothing capacitor, for instance, if output of a generator such as a solar panel is a DC voltage, the DC voltage may be input from the generator directly to the smoothing capacitor 103 without passing through the DC conversion unit 102.

The AC conversion unit 104 is configured, for example, as an AC conversion circuit using an IGBT and a flywheel diode and it takes a DC voltage input from the smoothing capacitor 103 and a PWM directive input from the control unit 110 and converts the DC voltage to an arbitrary AC voltage. Now, it may be configured as an AC conversion circuit which performs an AC-to-AC conversion and may convert an AC voltage not passing through the smoothing capacitor 103 to an arbitrary AC voltage.

The current detection unit 106 detects an output current and outputs detected current information to the simulation unit 109.

The temperature detection unit 107 detects temperature of a semiconductor element such as, e.g., an IGBT and a diode and outputs a temperature signal to the simulation unit 109.

The voltage detection unit 108 detects a voltage of the smoothing capacitor 103 and outputs voltage information to the simulation unit 109

The simulation unit 109 switches over between a normal mode and a simulation mode for driving the AC conversion unit 104 according to a setting specified via the operational unit 111. The simulation unit 109 takes inputs of, for example, current information, temperature information, voltage information, and a signal input from the signal input unit 112. Then, the simulation unit 109 converts input information and outputs resultant information to the control unit 110 and outputs an ON/OFF directive to the switch unit 115 according to a setting specified via the operational unit 111. Also, the simulation unit 109 may store settings specified in advance via the operational unit 111 and start to output the stored settings according a signal input from the signal input unit 112.

The control unit 110 executes calculation on input information from the simulation unit 109 and outputs a PWM (Pulse Width Modulation) directive to the AC conversion unit 104. Also, the control unit 110 outputs a terminal operation directive to the signal output unit 114, based on input information from the simulation unit 109. Here, the terminal operation directive is a directive for the signal output unit 114 to output a specified signal to outside. Moreover, the control unit outputs a display directive to the display unit 113. Here, the display directive is a directive for the display to display specified information.

The operational unit 111 outputs setting information which has been input from outside to the simulation unit 109. The setting information includes, inter alia, information indicating a scale conversion value which will be described later and mode switchover information for switching over between the normal mode and the simulation mode.

The signal input unit 112 outputs, e.g., an analog voltage signal which has been input from outside to the simulation unit 109.

The display unit 113 takes a display directive from the control unit 110 and displays a state of the power conversion device according to the input display directive. For instance, the display unit 113 displays internal current information or the like after being scale converted or displays user alert information or the like which indicates that an overcurrent protection function is executed when the internal current information or the like fulfills a predetermined condition. Also, the display unit 113 displays information indicating either normal mode or simulation mode and displays an indication that the device has now entered the simulation mode upon switching from the normal mode to the simulation mode.

The signal output unit 114 takes a terminal operation directive from the control unit 110 and makes an output terminal operate.

The switch unit 115 takes an ON/OFF directive from the simulation unit 109 and performs ON/OFF switching of a PWM directive which is sent from the control unit 110 to the AC conversion unit 104.

Fig. 2 is one example of the normal mode in the present Example.

A current information switchover unit 201 takes an input of a switchover signal from the operational unit 111. The current information switchover unit 201 outputs current information from the current detection unit 106 to the control unit 110 in the normal mode and outputs a signal from a current information scale conversion unit 202 to the control unit 110 in the simulation mode.

The current information scale conversion unit 202 takes inputs of a signal from the signal input unit 112 and a scale conversion value from the operational unit 111, multiples the signal from the signal input unit 112 by the scale conversion value from the operational unit 111, and outputs a resultant signal to the current information switchover unit 201. Here, the scale conversion value is a parameter for converting an input signal from outside to internal current information. For example, if a voltage falling from 0 to 10 V is input to the signal input unit 112, the current information scale conversion unit 202 converts the voltage to an equivalent current falling from 0 to 30 A as internal current information. As for the scale conversion value, a user may set it via the operational unit 111 or it may be registered in advance in the current information scale conversion unit 202.

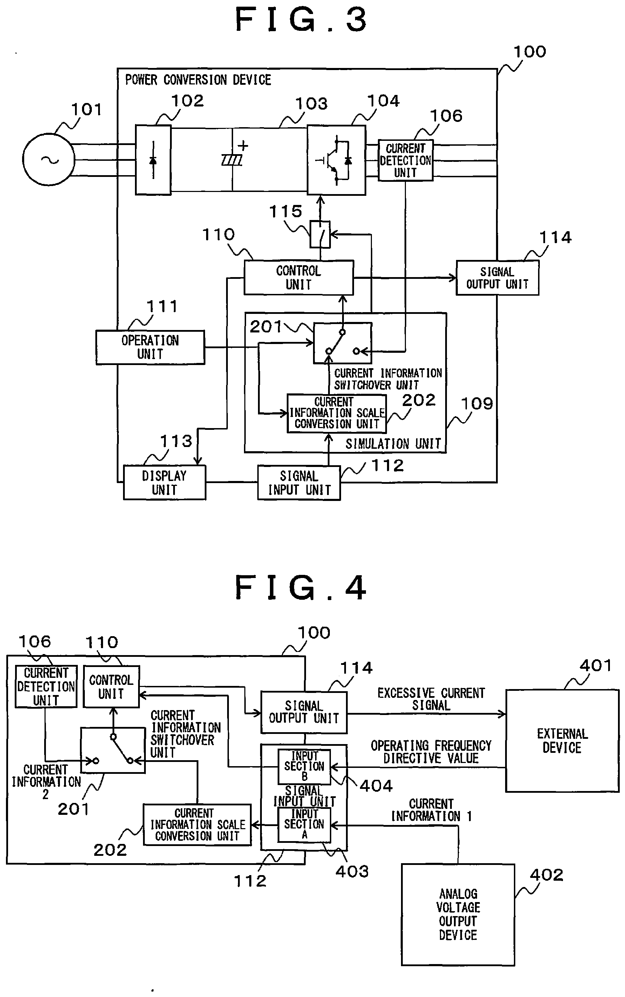

The switch unit 115 operates differently between normal mode and simulation mode. In thenormal mode, the switch unit outputs a PWM signal which is output from the control unit 110 directly to the AC conversion unit 104 to drive an AC electric motor 203. The current detection unit 106 detects a current that is output from the power conversion device 100 to the AC electric motor 203 and that current information is output directly to the control unit 110. A description about the simulation mode is provided with reference to Fig. 3.

Fig. 3 is an example of changing an internal current value from outside in the simulation mode in the present Example.

In Fig. 3, the switch unit 115 and the current information switchover unit 201 in the simulation unit 109 operate differently than in the normal mode depicted in Fig. 2.

According to a directive from the simulation unit, the switch unit 115 nullifies a PWM directive which is output from the control unit 110. Consequently, nothing is output to the AC conversion unit 104.

The current information switchover unit 201 outputs a signal from the current information scale conversion unit 202 to the control unit 110.

By this configuration, in the simulation mode in the present Example, current information that is output from the current detection unit 106 as a result of driving the AC electric motor 203 is not used and information that is given from outside is adopted as current information. This allows internal current information to be changed from outside.

In the case of a power conversion device 100 for which driving the AC electric motor 203 is prerequisite, changing current information from outside may disable current protection of the power conversion device 100 or may make it impossible to drive the AC electric motor 203 properly. Therefore, conventionally, current information is information that can only be monitored from outside.

In contrast, in the present Example, the above-mentioned current information is allowed to be changed from outside, while the AC electric motor 203 is not driven. This makes it possible to debug settings of the power conversion device 100 and settings of an external device 401 without driving the AC electric motor 203, whereas, it has so far been practiced to carry out testing for verification of such settings, while making the AC electric motor 203 operate actually.

Fig. 4 is an example of a system in which, when current flowing in the AC electric motor 203 has become higher than a predefined value, an external device 401 decreases the output frequency of the power conversion device 100 to decrease the rotational frequency of the AC electric motor 203 for temperature protection of the AC electric motor 203.

Here, supposing that an excessive current signal is output from the signal output unit 114 when current flowing in the AC electric motor 203 exceeds a certain threshold value, the user needs to set the excessive current signal to be output to the power conversion device 100 to make the external device 401 operate. Also, for the power conversion device 100, the user needs to set a threshold value by which the excessive current signal is to be output.

When the excessive current signal is not output from the signal output unit 114 of the power conversion device 100, the external device 401 outputs an operating frequency directive value equivalent to, e.g., 60 Hz to an input section B 404 of the power conversion device 100. When current flowing in the AC electric motor 203 has exceeded a certain threshold value and the excessive current signal has been output, the external device 401 outputs an operating frequency directive value equivalent to 30 Hz to the input section B.

The operating frequency directive value which has been input through the input section B is output to the control unit 110 and the control unit 110 gives an output that is determined depending on the operating frequency directive value to the AC electric motor 203.

Verification of settings of the power conversion device 100 and as to whether the external device 401 is set properly to carry out operation has so far been practiced in such a way that, while driving the AC electric motor 203 actually, by putting a load on it and increasing the current, the excessive current signal is forced to be output actually.

But, system verification was impossible in a situation where it is impossible to drive the AC electric motor 203, for instance, in a case where current does not increase, inter alia, for the reason that a braking system of the AC electric motor 203 is not yet completed or a load system is not yet completed.

In the present Example, current information 1 which has been input as an analog voltage from an analog voltage output device 402 to an input section A 403 is scale converted by the current information scale conversion unit 202 to current information that can be used within the power conversion device 100. Then, the current information switchover unit 201 outputs the scale converted current information to the control unit 110, instead of current information 2 that is actually detected current information.

When current information given from the current information switchover unit 201 has exceeded a set threshold value, the control unit 110 outputs a directive to output an excessive current signal to the signal output unit 114 and the excessive current signal is output from the signal output unit 114.

By this configuration, it is possible to increase current information that is input to the control unit 110 by increasing the output of the analog voltage output device 402 at arbitrary timing for the user without driving the AC electric motor 203 actually. In addition, by verifying that the power conversion device 100 operates at 30 Hz when the current information has become equal to or more than the threshold value by which the excessive current signal is to be output, it is possible to verify in advance operation of the external device 401 and settings of the power conversion device 100 without regard for a state of the system.

For instance, let us suppose a case where, for the power conversion device, a user sets a function that outputs a signal to the external device when the current has exceeded 20A as an alert function against current increase. In this case, at a point of time when the current value being increased by the output of the analog voltage output device 402 has exceeded 20A, a signal can be output from the signal output unit 114, as is so when the corresponding current flows in the AC electric motor 203.

For instance, also, let us suppose a case where, as an overcurrent protection function, a level of overcurrent protection for the power conversion device 100 is set at 25A. In this case, at a point of time when the current value being increased by the output of the analog voltage output device 402 has exceeded 25A, the control unit determines an abnormal state. Then, as information indicating the abnormal state, a signal is output from the signal output unit 114 and a user alert indicating that overcurrent protection is applied can also be displayed on the display unit 113, as is so when the corresponding current flows in the AC electric motor 203.

In the present Example, an example is given in which the control unit determines overcurrent from, e.g., an analog input value. However, the described embodiment can also be applied for a system where hardware compares an analog input value with a threshold of overcurrent and outputs a comparison signal when the input value has exceeded the threshold of overcurrent, and software determines overcurrent from that signal. In this case, in the simulation mode, the comparison signal (level signal) is input from outside to the signal input unit and the simulation unit outputs the level signal from outside to the control unit as a signal for the control unit to determine overcurrent. When the level signal from outside changes from Low to High, the simulation unit changes an internal level signal from Low to High and outputs it to the control unit. The control unit determines an overcurrent state from that level signal and outputs a terminal operation directive and a display directive. Thereby, a state where the overcurrent protection is effected can be created.

### Example 2

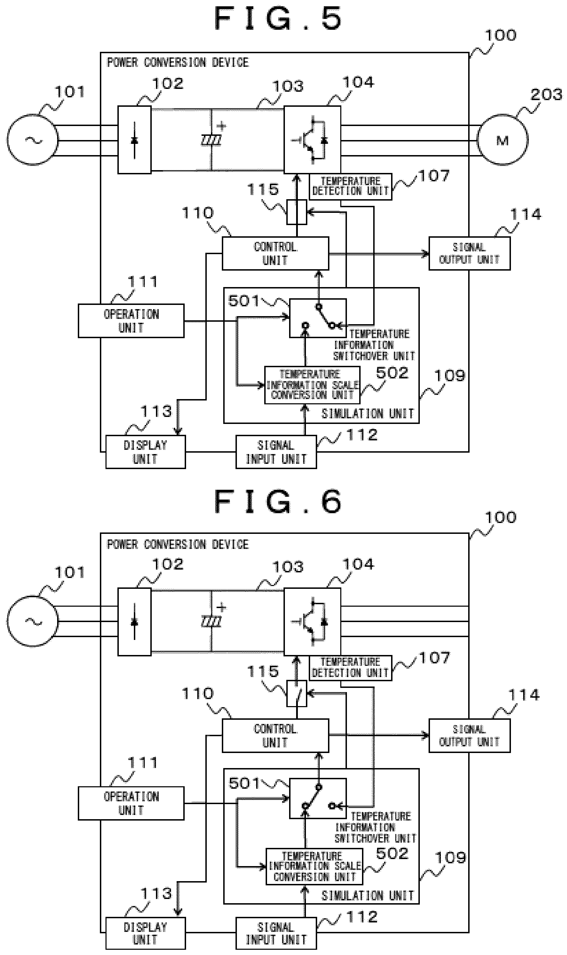

Fig. 5 is one example of the normal mode in Example 2 of embodiment.

Among components depicted in Fig. 5, components assigned the same reference numerals as in Example 1 have the same functions as in Example 1 and, therefore, their description is omitted.

A temperature information switchover unit 501 takes a switchover signal from the operational unit 111. The temperature information switchover unit 501 outputs temperature information from the temperature detection unit 107 to the control unit 110 in the normal mode and outputs a signal from a temperature information scale conversion unit 502 to the control unit 110 in the simulation mode.

The temperature information scale conversion unit 502 takes inputs of a signal from the signal input unit 112 and a scale conversion value from the operational unit 111 and multiplies the signal from the signal input unit 112 by the scale conversion value from the operational unit 111 and outputs a resultant signal to the temperature information switchover unit 501. The scale conversion value in the present Example is a parameter for converting an input signal from outside to internal temperature information. For example, if a voltage falling from 0 to 10 V is input to the signal input unit 112, the voltage is converted to an equivalent temperature falling from 0 to 100 °C as internal temperature information.

The switch unit 115 operates differently between normal mode and simulation mode. In the normal mode, the switch unit outputs a PWM signal which is output from the control unit 110 directly to the AC conversion unit 104 to drive the AC electric motor 203. A description about the simulation mode is provided with reference to Fig. 6.

Fig. 6 is an example of changing an internal temperature value from outside in the simulation mode in the present Example.

In Fig. 6, the switch unit 115 and the temperature information switchover unit 501 in the simulation unit 109 operate differently than in the normal mode depicted in Fig. 5.

According to a directive from the simulation unit, the switch unit 115 nullifies a PWM directive which is output from the control unit 110. Consequently, nothing is output to the AC conversion unit 104.

The temperature information switchover unit 501 outputs a signal from the temperature information scale conversion unit 502 to the control unit 110.

By this configuration, in the simulation mode in the present Example, temperature information that is output from the temperature detection unit 107 as a result of ambient temperature change in the installation environment and driving the AC electric motor 203 is not used and information that is given from outside is adopted as temperature information. This allows internal temperature information to be changed from outside.

In the case of a power conversion device 100 for which driving the AC electric motor 203 is prerequisite, changing temperature information from outside may disable temperature protection of the power conversion device 100. Therefore, conventionally, temperature information is information that can only be monitored from outside.

In contrast, in the present Example, the above-mentioned temperature information is allowed to be changed from outside, while the AC electric motor 203 is not driven. This makes it possible to debug settings of the power conversion device 100 and settings of the external device 401 without driving the AC electric motor 203, whereas, it has so far been practiced to carry out testing for verification of such settings, while changing the ambient temperature in the installation environment actually and making the AC electric motor 203 operate.

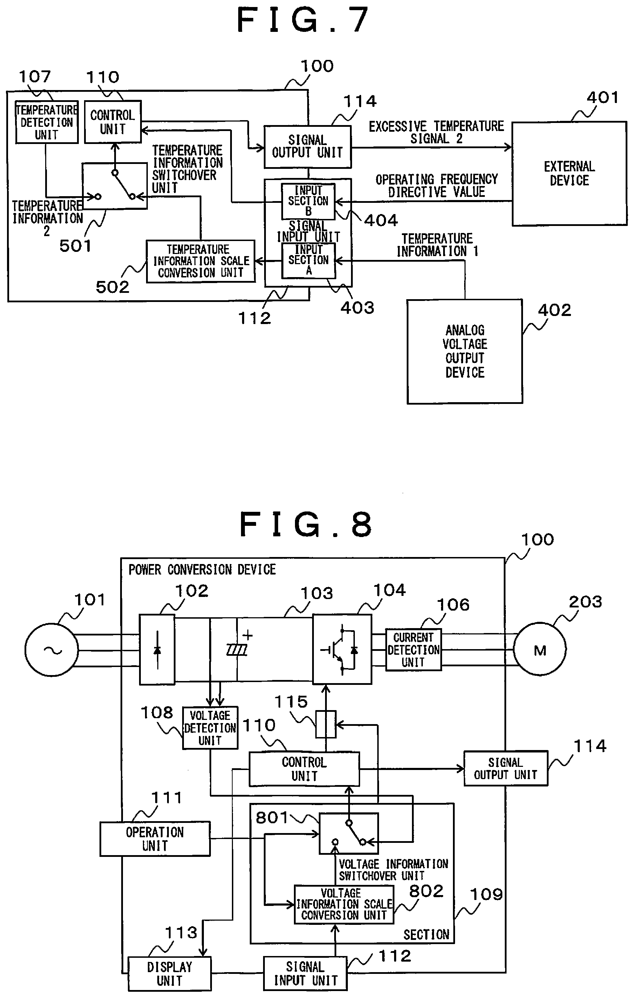

Fig. 7 is an example of a system in which, when temperature that is output from the temperature detection unit 107 has become higher than a predefined value, the external device 401 decreases the output frequency of the power conversion device 100 to decrease the rotational frequency of the AC electric motor 203. This prevents rise of internal temperature of the power conversion device 100 and prevents system stop due to temperature protection of the power conversion device 100.

Here, supposing that an excessive temperature signal is output from the signal output unit 114 when temperature that is output from the temperature detection unit 107 exceeds a certain threshold value, the user needs to set the excessive temperature signal to be output to the power conversion device 100 to make the external device 401 operate. Also, for the power conversion device 100, the user needs to set a threshold value by which the excessive temperature signal is to be output.

When the excessive temperature signal is not output from the signal output unit 114 of the power conversion device 100, the external device 401 outputs an operating frequency directive value equivalent to, e.g., 60 Hz to the input section B 404 of the power conversion device 100. When temperature that is output from the temperature detection unit 107 exceeds a certain threshold value and the excessive temperature signal has been output, the external device 401 outputs an operating frequency directive value equivalent to 30 Hz to the input section B.

The operating frequency directive value which has been input through the input section B is output to the control unit 110 and the control unit 110 gives an output that is determined depending on the operating frequency directive value to the AC electric motor 203.

Verification of settings of the power conversion device 100 and as to whether the external device 401 is set properly to carry out operation has so far been practiced in such a way that, while driving the AC electric motor 203 actually, by putting a load on it to increase the internal temperature or by increasing the ambient temperature to increase the internal temperature of the power conversion device 100 actually, the excessive temperature signal is forced to be output actually.

But, system verification was impossible in a situation where it is impossible to drive the AC electric motor 203, for instance, in a case where current does not increase and the ambient temperature cannot be increased actually, inter alia, for the reason that a braking system of the AC electric motor 203 is not yet completed or a load system is not yet completed.

In the present Example, temperature information 1 which has been input as an analog voltage from the analog voltage output device 402 to the input section A 403 is scale converted by the temperature information scale conversion unit 502 to temperature information that can be used within the power conversion device 100. Then, the temperature information switchover unit 501 outputs the scale converted temperature information to the control unit 110, instead of temperature information 2 that is actually detected temperature information.

When temperature information given from the temperature information switchover unit 501 has exceeded a set threshold value, the control unit 110 outputs a directive to output an excessive temperature signal to the signal output unit 114 and the excessive temperature signal is output from the signal output unit 114.

By this configuration, it is possible to increase temperature information that is input to the control unit 110 by increasing the output of the analog voltage output device 402 at arbitrary timing for the user without driving the AC electric motor 203 actually. In addition, by verifying that the power conversion device 100 operates at 30 Hz when the temperature information has become equal to or more than the threshold value by which the excessive temperature signal is to be output, it is possible to verify in advance operation of the external device 401 and settings of the power conversion device 100 without regard for a state of the system.

For instance, let us suppose a case where, as an overheat protection function, a level of overheat protection for the power conversion device 100 is set at 100 °C. In this case, at a point of time when temperature being increased by the output of the analog voltage output device 402 has exceeded 100 °C, the control unit determines an abnormal state. Then, as information indicating the abnormal state, a signal is output from the signal output unit 114 and a user alert indicating that overheat protection is applied can also be displayed on the display unit 113, as is so when temperature of the power conversion device 100 has risen up to that level.

In the present Example, an example is given in which overheat protection is determined from, e.g., an analog input value that is input from the external device 401. However, it is also possible to have a temporal change of temperature information stored in the simulation unit beforehand and change internal temperature information according to the stored temporal change of temperature information, triggered by an input signal to the input unit 112. This makes it possible to debug the power conversion device, even using an external device that does not have an analog output.

### Example 3

Fig. 8 is one example of the normal mode in Example 3 of embodiment.

Among components depicted in Fig. 8, components assigned the same reference numerals as in Example 1 have the same functions as in Example 1 and, therefore, their description is omitted.

A voltage information switchover unit 801 takes a switchover signal from the operational unit 111. The voltage information switchover unit 801 outputs voltage information from the voltage detection unit 108 to the control unit 110 in the normal mode and outputs a signal from a voltage information scale conversion unit 802 to the control unit 110 in the simulation mode.

The voltage information scale conversion unit 802 takes inputs of a signal from the signal input unit 112 and a scale conversion value from the operational unit 111 and multiplies the signal from the signal input unit 112 by the scale conversion value from the operational unit 111 and outputs a resultant signal to the voltage information switchover unit 801. Here, the scale conversion value is a parameter for converting an input signal from outside to internal voltage information. For example, if a voltage falling from 0 to 10 V is input to the signal input unit 112, the voltage information scale conversion unit 802 coverts the voltage to an equivalent voltage falling from 0 to 800 V as internal voltage information.

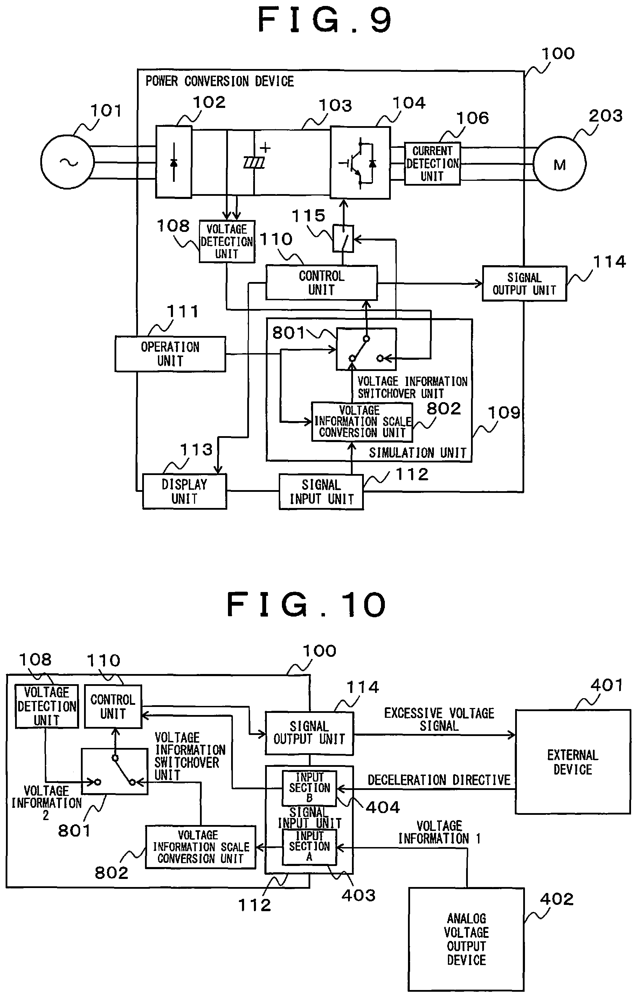

The switch unit 115 operates differently between normal mode and simulation mode. In the normal mode, the switch unit outputs a PWM signal which is output from the control unit 110 directly to the AC conversion unit 104 to drive the AC electric motor 203. A description about the simulation mode is provided with reference to Fig. 9.

Fig. 9 is an example of changing an internal voltage value from outside in the simulation mode in the present Example.

In Fig. 9, the switch unit 115 and the voltage information switchover unit 801 in the simulation unit 109 operate differently than in the normal mode depicted in Fig. 8.

According to a directive from the simulation unit, the switch unit 115 nullifies a PWM directive which is output from the control unit 110. Consequently, nothing is output to the AC conversion unit 104.

The voltage information switchover unit 801 outputs a signal from the voltage information scale conversion unit 802 to the control unit 110.

By this configuration, in the simulation mode in the present Example, voltage information that is output from the voltage detection unit 108 as a result of driving the AC electric motor 203 is not used and information that is given from outside is adopted as voltage information. This allows internal voltage information to be changed from outside.

In the case of a power conversion device 100 for which driving the AC electric motor 203 is prerequisite, changing voltage information from outside may disable voltage protection of the power conversion device 100. Therefore, conventionally, voltage information is information that can only be monitored from outside.

In contrast, in the present Example, the above-mentioned voltage information is allowed to be changed from outside, while the AC electric motor 203 is not driven. This makes it possible to debug settings of the power conversion device 100 and settings of the external device without driving the AC electric motor 203, whereas, it has so far been practiced to carry out testing for verification of such settings, while making the AC electric motor 203 operate actually.

Fig. 10 is an example of a system in which, when voltage that is output from the voltage detection unit 108 has become higher than a predefined value, the external device 401 temporarily stops deceleration of the power conversion device 100 to decrease regenerative power from of the AC electric motor 203. This prevents rise of internal voltage of the power conversion device 100 and prevents system stop due to voltage protection of the power conversion device 100.

Here, supposing that an excessive voltage signal is output from the signal output unit 114 when voltage that is output from the voltage detection unit 108 exceeds a certain threshold value, the user needs to set the excessive voltage signal to be output to the power conversion device 100 to make the external device 401 operate. Also, for the power conversion device 100, the user needs to set a threshold value by which the excessive voltage signal is to be output.

When the excessive voltage signal is not output from the signal output unit 114 of the power conversion device 100, the external device 401 outputs a deceleration directive to the input section B 404 of the power conversion device 100. When voltage that is output from the voltage detection unit 108 exceeds a certain threshold value and the excessive voltage signal has been output, the external device 401 outputs a deceleration stop directive to the input section B.

The deceleration directive and deceleration stop directive which have been input through the input section B 404 are output to the control unit 110 and the control unit 110 gives an output that is determined according to either of the deceleration directive and deceleration stop directive to the AC electric motor 203.

Verification of settings of the power conversion device 100 and as to whether the external device 401 is set properly to carry out operation has so far been practiced in such a way that, while driving the AC electric motor 203 actually, by carrying out deceleration to increase the internal voltage of the power conversion device 100, the excessive voltage signal is forced to be output actually.

But, system verification was impossible in a situation where it is impossible to drive the AC electric motor 203, for instance, in a case where sufficient regenerative power cannot be gained from the AC electric motor 203 even by carrying out deceleration, inter alia, for the reason that a braking system of the AC electric motor 203 is not yet completed or a load system is not yet completed.

In the present Example, voltage information 1 which has been input as an analog voltage from the analog voltage output device 402 to the input section A 403 is scale converted by the voltage information scale conversion unit 802 to voltage information that can be used within the power conversion device 100. Then, the voltage information switchover unit 801 outputs the scale converted voltage information to the control unit 110, instead of voltage information 2 that is actually detected voltage information.

When voltage information given from the voltage information switchover unit 801 has exceeded a set threshold value, the control unit 110 outputs a directive to output an excessive voltage signal to the signal output unit 114 and the excessive voltage signal is output from the signal output unit 114.

By this configuration, it is possible to increase voltage information that is input to the control unit 110 by increasing the output of the analog voltage output device 402 at arbitrary timing for the user without driving the AC electric motor 203 actually. In addition, by verifying that the power conversion device 100 behaves to stop deceleration when the voltage information has become equal to or more than the threshold value by which the excessive voltage signal is to be output, it is possible to verify in advance operation of the external device 401 and settings of the power conversion device 100 without regard for a state of the system.

For instance, let us suppose a case where, as an overvoltage protection function, a level of overvoltage protection for the power conversion device 100 is set at 400 V. In this case, at a point of time when the voltage value being increased by the output of the analog voltage output device 402 has exceeded 400 V, the control unit determines an abnormal state. Then, as information indicating the abnormal state, a signal is output from the signal output unit 114 and a user alert indicating that overvoltage protection is applied can also be displayed on the display unit 113, as is so when the internal voltage of the power conversion device 100 has risen up to that level.

For instance, also, let us suppose a case where the user sets a function to output a signal when the voltage has fallen less than 200 V as an alert function against voltage drop. In this case, when the voltage value being decreased by the output of the analog voltage output device 402 has fallen less than 200 V, a signal can be output from the signal output unit 114, as is so when the internal voltage of the power conversion device 100 has fallen.

For instance, also, let us suppose a case where, as an undervoltage protection function, a level of undervoltage protection for the power conversion device 100 is set at 150 V. In this case, at a point of time when the voltage value being decreased by the output of the analog voltage output device 402 has fallen less than 150 V, the control unit determines an abnormal state. Then, as information indicating the abnormal state, a signal is output from the signal output unit 114 and a user alert indicating that undervoltage protection is applied can also be displayed on the display unit 113, as is so when the internal voltage of the power conversion device 100 has fallen.

A subset or all of the aforementioned components, functions, processing units, processing means, etc. may be implemented by hardware; for example, by designing an integrated circuit to implement them. In addition, the aforementioned components, functions, etc. may be implemented by software in such a way that a processor interprets and executes a program that implements the respective functions. Information such as a program implementing the respective functions, tables, and files can be placed in a recording device such as a memory, hard disk, and SSD (Solid State Drive) or a recording medium such as an IC card, SD card, and DVD.

In addition, control lines and information lines which are considered as necessary for explanation are depicted and all control lines and information lines involved in a product are not necessarily depicted. Actually, almost all components may be considered to be interconnected.

### Reference Signs List

- 100: power conversion device,
- 101: three-phase AC power supply,
- 102: DC conversion unit,
- 103: smoothing capacitor,
- 104: AC conversion unit,
- 106: current detection unit,
- 107: temperature detection unit,
- 108: voltage detection unit,
- 109: simulation unit,
- 110: control unit,
- 111: operational unit
- 112: signal input unit,
- 113: display unit,
- 114: signal output unit,
- 115: switch unit,
- 201: current information switchover unit,
- 202: current information scale conversion unit,
- 203: AC electric motor,
- 401: external device,
- 402: analog voltage output device,
- 403: input section A,
- 404: input section B,
- 501: temperature information switchover unit,
- 502: temperature information scale conversion unit,
- 801: voltage information switchover unit,
- 802: voltage information scale conversion unit

## Claims

1. A power conversion device (100) comprising:
an AC conversion unit (104) which is configured to convert a DC voltage or an AC voltage to an arbitrary AC voltage,
a signal input unit (112) to which an input analog signal is input from outside,
a signal output unit (114) which is configured to output a signal to outside,
a display unit (113) which is configured to display a state of the power conversion device,
a control unit (110) which is configured to output a PWM directive to the AC conversion unit (104), a terminal operation directive to the signal output unit (114), and a display directive to the display unit (113),
an operational unit (111),
a switch unit (115) which is configured to receive the PWM directive from the control unit (110) and to output the PWM directive to the AC conversion unit (104) when receiving an ON directive and to output nothing when receiving an OFF directive, and
a simulation unit (109) which is configured to switch over, according to a setting specified via the operational unit (111), between a normal mode in which the simulation unit (109) is configured to output the ON directive to the switch unit (115) and a simulation mode which is different from the normal mode, in which the simulation unit (109) is configured to output the OFF directive to the switch unit (115), wherein
in the simulation mode, the power conversion device (100) is configured to receive an input signal from outside via the signal input unit (112), wherein, in the simulation mode,
the simulation unit (109) is further configured to convert the input signal from the outside to **an** internal analog value and **to** output **this** analog internal value to the control unit (110), and wherein the simulation unit (109) is configured to receive an input of a scale conversion value via **the** operational unit (111) and **to** convert the input signal from the outside to the internal analog value using also the scale conversion value, wherein, in the simulation mode,
the control unit (110) **is** configured to determine an abnormal state when the internal analog value fulfills a specified condition and to output at least one of the terminal operation directive and the display directive as information indicating the abnormal state, without driving the AC conversion unit (104),
**characterized in that**
the internal analog value is :
(i) a scale converted current information instead of a current information output by the current detection unit (106) that detects an output current that is output from the power conversion device (100) to an AC electric motor (203), wherein for providing said scale converted current information, the simulation unit (109) comprises:
a current information switchover unit (201) which is adapted to take an input of a switchover signal from the operational unit (111), wherein
the current information switchover unit (201) is adapted to output current information from the current detection unit (106) to the control unit (110) in the normal mode and adapted to output a signal from a current information scale conversion unit (202) to the control unit (110) in the simulation mode, and
a current information scale conversion unit (202) which is adapted to take input of the input signal from the signal input unit (112) and the scale conversion value from the operational unit (111), to multiply the input signal from the signal input unit (112) by the scale conversion value from the operational unit (111), and **to** output the resultant scale converted current information to the current information switchover unit (201),
(ii) a scale converted temperature information instead of a temperature information output by a temperature detection unit (107) that detects temperature of a semiconductor element of the power conversion device (100), wherein for providing said scale converted temperature information, the simulation unit (109) comprises:
a temperature information switchover unit (501) which is adapted to take an input of a switchover signal from the operational unit (111), wherein the temperature information switchover unit (501) is adapted to output temperature information from the temperature detection unit (107) to the control unit (110) in the normal mode and adapted to output a signal from a temperature information scale conversion unit (502) to the control unit (110) in the simulation mode, and
a temperature information scale conversion unit (502) which is adapted to take input of the input signal from the signal input unit (112) and the scale conversion value from the operational unit (111), to multiply the input signal from the signal input unit (112) by the scale conversion value from the operational unit (111), and to output the resultant scale converted temperature information to the temperature information switchover unit (501); or
(iii) a scale converted voltage information instead of a voltage information output by a voltage detection unit (108) that detects a voltage of a smoothing capacitor (103) of the power conversion device (100), wherein for providing said scale converted voltage information, the simulation unit (109) comprises:
a voltage information switchover unit (801) which is adapted to take an input of a switchover signal from the operational unit (111), wherein the voltage information switchover unit (801) is adapted to output voltage information from the voltage detection unit (108) to the control unit (110) in the normal mode and adapted to output a signal from a voltage information scale conversion unit (802) to the control unit (110) in the simulation mode, and
a voltage information scale conversion unit (802) which is adapted to take input of the input signal from the signal input unit (112) and the scale conversion value from the operational unit (111), to multiply the input signal from the signal input unit (112) by the scale conversion value from the operational unit (111), and **to** output the resultant scale converted voltage information to the voltage information switchover unit (801).

2. The power conversion device according to any of claim 1, wherein
the simulation unit (109) is further configured such that, as an alternative to the internal analog value being changed by converting an input signal received from outside via the signal input unit (112) using the scale conversion value, the simulation unit (109) internally stores information representing a temporal change of the internal analog value beforehand and changes the internal analog value using the information representing the temporal change, triggered by the input signal from the outside

3. The power conversion device according to any of claims 1 or 2, wherein
the display unit (113) displays the internal analog value.

4. The power conversion device according to any of claims 1 to 3, wherein
upon switching from the normal mode to the simulation mode, performed by the simulation unit (109), the display unit (113) displays information indicating that the power conversion device (100) has now entered the simulation mode.

## Patentansprüche

1. Leistungsumsetzungsvorrichtung (100), die Folgendes umfasst:
eine Wechselstrom-Umsetzungseinheit (104), die konfiguriert ist, eine Gleichspannung oder eine Wechselspannung in eine beliebige Wechselspannung umzusetzen,
eine Signaleingabeeinheit (112), in die ein analoges Eingangssignal von außen eingegeben wird,
eine Signalausgabeeinheit (114), die konfiguriert ist, ein Signal nach außen auszugeben,
eine Anzeigeeinheit (113), die konfiguriert ist, einen Zustand der Leistungsumsetzungsvorrichtung anzuzeigen,
eine Steuereinheit (110), die konfiguriert ist, eine PWM-Anweisung an die Wechselstrom-Umsetzungseinheit (104), eine Endgerät-Betriebsanweisung an die Signalausgabeeinheit (114) und eine Anzeigeanweisung an die Anzeigeeinheit (113) auszugeben,
eine Betriebseinheit (111),
eine Schaltereinheit (115), die konfiguriert ist, die PWM-Anweisung von der Steuereinheit (110) zu empfangen und die PWM-Anweisung an die Wechselstrom-Umsetzungseinheit (104) auszugeben, wenn sie eine EIN-Anweisung empfängt, und nichts auszugeben, wenn sie eine AUS-Anweisung empfängt, und
eine Simulationseinheit (109), die konfiguriert ist, gemäß einer Einstellung, die über die Betriebseinheit (111) spezifiziert wird, zwischen einer regulären Betriebsart, in der die Simulationseinheit (109) konfiguriert ist, die EIN-Anweisung an die Schaltereinheit (115) auszugeben, und einer Simulationsbetriebsart, die von der regulären Betriebsart verschieden ist, in der die Simulationseinheit (109) konfiguriert ist, die AUS-Anweisung an die Schaltereinheit (115) auszugeben, umzuschalten,
wobei
in der Simulationsbetriebsart die Leistungsumsetzungsvorrichtung (100) konfiguriert ist, über die Signaleingabeeinheit (112) ein Eingangssignal von außen zu empfangen,
in der Simulationsbetriebsart die Simulationseinheit (109) ferner konfiguriert ist, das Eingangssignal von außen in einen internen analogen Wert umzusetzen und diesen analogen internen Wert an die Steuereinheit (110) auszugeben,
und wobei die Simulationseinheit (109) konfiguriert ist, über die Betriebseinheit (111) einen Eingang eines Skalierungsumsetzungswertes zu empfangen und das Eingangssignal von außen außerdem unter Verwendung des Skalierungsumsetzungswertes in den internen analogen Wert umzusetzen, wobei
in der Simulationsbetriebsart die Steuereinheit (110) konfiguriert ist, einen anomalen Zustand zu bestimmen, wenn der interne analoge Wert eine spezifizierte Bedingung erfüllt, und die Endgerät-Betriebsanweisung und/oder die Anzeigeanweisung als Informationen auszugeben, die den anomalen Zustand angeben, ohne die Wechselstrom-Umsetzungseinheit (104) anzusteuern,
**dadurch gekennzeichnet, dass**
der interne analoge Wert Folgendes enthält:
(i) gemäß einer Skalierung umgesetzte Strominformationen anstelle von Strominformationen, die durch die Stromdetektionseinheit (106) ausgegeben werden, die einen Ausgangsstrom detektiert, der von der Leistungsumsetzungsvorrichtung (100) an einen Wechselstrom-Elektromotor (203) ausgegeben wird, wobei die Simulationseinheit (109) zum Bereitstellen der gemäß einer Skalierung umgesetzten Strominformationen Folgendes umfasst:
eine Strominformationen-Umschalteinheit (201), die ausgelegt ist, einen Eingang eines Umschaltsignals von der Betriebseinheit (111) anzunehmen, wobei
die Strominformationen-Umschalteinheit (201) ausgelegt ist, in der regulären Betriebsart Strominformationen von der Stromdetektionseinheit (106) an die Steuereinheit (110) auszugeben, und ausgelegt ist, in der Simulationsbetriebsart ein Signal von einer Strominformationen-Skalierungsumsetzungseinheit (202) an die Steuereinheit (110) auszugeben, und
eine Strominformationen-Skalierungsumsetzungseinheit (202), die ausgelegt ist, einen Eingang des Eingangssignals von der Signaleingabeeinheit (112) und den Skalierungsumsetzungswert von der Betriebseinheit (111) anzunehmen, das Eingangssignal von der Signaleingabeeinheit (112) mit dem Skalierungsumsetzungswert von der Betriebseinheit (111) zu multiplizieren und die resultierenden, gemäß der Skalierung umgesetzten Strominformationen an die Strominformationen-Umschalteinheit (201) auszugeben;
(ii) gemäß einer Skalierung umgesetzte Temperaturinformationen anstelle von Temperaturinformationen. die durch eine Temperaturdetektionseinheit (107) ausgegeben werden, die eine Temperatur eines Halbleiterelements der Leistungsumsetzungsvorrichtung (100) detektiert, wobei die Simulationseinheit (109) zum Bereitstellen der gemäß einer Skalierung umgesetzten Temperaturinformationen Folgendes umfasst:
eine Temperaturinformationen-Umschalteinheit (501), die ausgelegt ist, einen Eingang eines Umschaltsignals von der Betriebseinheit (111) anzunehmen, wobei die Temperaturinformationen-Umschalteinheit (501) ausgelegt ist, in der regulären Betriebsart Temperaturinformationen von der Temperaturdetektionseinheit (107) an die Steuereinheit (110) auszugeben, und ausgelegt ist, in der Simulationsbetriebsart ein Signal von einer Temperaturinformationen-Skalierungsumsetzungseinheit (502) an die Steuereinheit (110) auszugeben, und
eine Temperaturinformationen-Skalierungsumsetzungseinheit (502), die ausgelegt ist, einen Eingang des Eingangssignals von der Signaleingabeeinheit (112) und den Skalierungsumsetzungswert von der Betriebseinheit (111) anzunehmen, das Eingangssignal von der Signaleingabeeinheit (112) mit dem Skalierungsumsetzungswert von der Betriebseinheit (111) zu multiplizieren und die resultierenden, gemäß der Skalierung umgesetzten Temperaturinformationen an die Temperaturinformationen-Umschalteinheit (501) auszugeben; oder
(iii) gemäß einer Skalierung umgesetzte Spannungsinformationen anstelle von Spannungsinformationen. die durch eine Spannungsdetektionseinheit (108) ausgegeben werden, die eine Spannung eines Glättungskondensators (103) der Leistungsumsetzungsvorrichtung (100) detektiert, wobei die Simulationseinheit (109) zum Bereitstellen der gemäß einer Skalierung umgesetzten Spannungsinformationen Folgendes umfasst:
eine Spannungsinformationen-Umschalteinheit (801), die ausgelegt ist, einen Eingang eines Umschaltsignals von der Betriebseinheit (111) anzunehmen, wobei die Spannungsinformationen-Umschalteinheit (801) ausgelegt ist, in der regulären Betriebsart Spannungsinformationen von der Spannungsdetektionseinheit (108) an die Steuereinheit (110) auszugeben, und ausgelegt ist, in der Simulationsbetriebsart ein Signal von einer Spannungsinformationen-Skalierungsumsetzungseinheit (802) an die Steuereinheit (110) auszugeben, und
eine Spannungsinformationen-Skalierungsumsetzungseinheit (802), die ausgelegt ist, einen Eingang des Eingangssignals von der Signaleingabeeinheit (112) und den Skalierungsumsetzungswert von der Betriebseinheit (111) anzunehmen, das Eingangssignal von der Signaleingabeeinheit (112) mit dem Skalierungsumsetzungswert von der Betriebseinheit (111) zu multiplizieren und die resultierenden, gemäß der Skalierung umgesetzten Spannungsinformationen an die Spannungsinformationen-Umschalteinheit (801) auszugeben.

2. Leistungsumsetzungsvorrichtung nach Anspruch 1, wobei
die Simulationseinheit (109) ferner derart konfiguriert ist, dass als eine Alternative dazu, dass der interne analoge Wert geändert wird, indem ein Eingangssignal, das über die Signaleingabeeinheit (112) von außen empfangen wird, unter Verwendung des Skalierungsumsetzungswertes umgesetzt wird, die Simulationseinheit (109) vorab intern Informationen speichert, die eine zeitliche Änderung des internen analogen Wertes darstellen, und den internen analogen Wert unter Verwendung der Informationen, die die zeitliche Änderung darstellen, ausgelöst durch das Eingangssignal von außen ändert.

3. Leistungsumsetzungsvorrichtung nach einem der Ansprüche 1 oder 2, wobei
die Anzeigeeinheit (113) den internen analogen Wert anzeigt.

4. Leistungsumsetzungsvorrichtung nach einem der Ansprüche 1 bis 3, wobei
die Anzeigeeinheit (113) aufgrund des Umschaltens von der regulären Betriebsart in die Simulationsbetriebsart, das durch die Simulationseinheit (109) durchgeführt wird, Informationen anzeigt, die angeben, dass die Leistungsumsetzungsvorrichtung (100) nun in die Simulationsbetriebsart eingetreten ist.

## Revendications

1. Dispositif de conversion de puissance (100) comprenant :
une unité de conversion CA (104) qui est configurée pour convertir une tension CC ou une tension CA en une tension CA arbitraire,
une unité d'entrée de signal (112) vers laquelle un signal analogique d'entrée est entré depuis l'extérieur,
une unité de sortie de signal (114) qui est configurée pour sortir un signal vers l'extérieur,
une unité d'affichage (113) qui est configurée pour afficher un état du dispositif de conversion de puissance,
une unité de commande (110) qui est configurée pour sortir une instruction PWM vers l'unité de conversion CA (104), une instruction d'opération de terminal vers l'unité de sortie de signal (114), et une instruction d'affichage vers l'unité d'affichage (113),
une unité opérationnelle (111),
une unité de commutation (115) qui est configurée pour recevoir l'instruction PWM provenant de l'unité de commande (110) et pour sortir l'instruction PWM vers l'unité de conversion CA (104) lors d'une réception d'une instruction ON et pour ne rien sortir lors d'une réception d'une instruction OFF, et
une unité de simulation (109) qui est configurée pour commuter, selon un réglage spécifié via l'unité opérationnelle (111), entre un mode normal dans lequel l'unité de simulation (109) est configurée pour sortir l'instruction ON vers l'unité de commutation (115), et un mode de simulation qui est différent du mode normal, l'unité de simulation (109) étant configurée pour sortir l'instruction OFF vers l'unité de commutation (115),
dans lequel, dans le mode de simulation, le dispositif de conversion de puissance (100) est configuré pour recevoir un signal d'entrée depuis l'extérieur via l'unité d'entrée de signal (112),
dans lequel, dans le mode de simulation, l'unité de simulation (109) est en outre configurée pour convertir le signal d'entrée provenant de l'extérieur en une valeur analogique interne et pour sortir cette valeur interne analogique vers l'unité de commande (110),
et dans lequel l'unité de simulation (109) est configurée pour recevoir une entrée d'une valeur de conversion d'échelle via l'unité opérationnelle (111) et pour convertir le signal d'entrée provenant de l'extérieur en la valeur analogique interne en utilisant également la valeur de conversion d'échelle,
dans lequel, dans le mode de simulation, l'unité de commande (110) est configurée pour déterminer un état anormal quand la valeur analogique interne remplit une condition spécifiée, et pour sortir l'une au moins d'une instruction d'opération de terminal et de l'instruction d'affichage à titre d'informations indiquant l'état anormal, sans piloter l'unité de conversion CA (104),
**caractérisé en ce que**
la valeur analogique interne est :
(i) des informations de courant converties selon une échelle au lieu d'informations de courant sorties par l'unité de détection de courant (106) qui détecte un courant de sortie qui est sorti depuis le dispositif de conversion de puissance (100) vers un moteur électrique CA (203), dans lequel, pour fournir lesdites informations de courant converties selon une échelle, l'unité de simulation (109) comprend :
une unité de commutation d'informations de courant (201) qui est adaptée pour admettre une entrée d'un signal de commutation provenant de l'unité opérationnelle (111), dans lequel
l'unité de commutation d'informations de courant (201) est adaptée pour sortir des informations de courant provenant de l'unité de détection de courant (106) vers l'unité de commande (110) dans le mode normal, et est adaptée pour sortir un signal provenant d'une unité de conversion d'échelle d'informations de courant (202) vers l'unité de commande (110) dans le mode de simulation, et
une unité de conversion d'échelle d'informations de courant (202) qui est adaptée pour admettre une entrée du signal d'entrée provenant de l'unité d'entrée de signal (112) et la valeur de conversion d'échelle provenant de l'unité opérationnelle (111), pour multiplier le signal d'entrée provenant de l'unité d'entrée de signal (112) par la valeur de conversion d'échelle provenant de l'unité opérationnelle (111), et pour sortir les informations de courant converties selon une échelle qui en résultent vers l'unité de commutation d'informations de courant (201),
(ii) des informations de température converties selon une échelle au lieu d'informations de température sorties par une unité de détection de température (107) qui détecte une température d'un élément semiconducteur du dispositif de conversion de puissance (100), dans lequel, pour fournir lesdites informations de température converties selon une échelle, l'unité de simulation (109) comprend :
une unité de commutation d'informations de température (501) qui est adaptée pour admettre une entrée d'un signal de commutation provenant de l'unité opérationnelle (111), l'unité de commutation d'informations de température (501) étant adaptée pour sortir des informations de température provenant de l'unité de détection de température (107) vers l'unité de commande (110) dans le mode normal, et est adaptée pour sortir un signal provenant d'une unité de conversion d'échelle d'informations de température (502) vers l'unité de commande (110) dans le mode de simulation, et
une unité de conversion d'échelle d'informations de température (502) qui est adaptée pour admettre une entrée du signal d'entrée provenant de l'unité d'entrée de signal (112) et la valeur de conversion d'échelle provenant de l'unité opérationnelle (111), pour multiplier le signal d'entrée provenant de l'unité d'entrée de signal (112) par la valeur de conversion d'échelle provenant de l'unité opérationnelle (111), et pour sortir les informations de température converties selon une échelle qui en résultent vers l'unité de commutation d'informations de température (501) ; ou
(iii) des informations de tension converties selon une échelle au lieu d'informations de tension sorties par une unité de détection de tension (108) qui détecte une tension d'un condensateur de lissage (103) du dispositif de conversion de puissance (100), dans lequel, pour fournir lesdites informations de tension converties selon une échelle, l'unité de simulation (109) comprend :
une unité de commutation d'informations de tension (801) qui est adaptée pour admettre une entrée d'un signal de commutation provenant de l'unité opérationnelle (111), l'unité de commutation d'informations de tension (801) étant adaptée pour sortir des informations de tension provenant de l'unité de détection de tension (108) vers l'unité de commande (110) dans le mode normal, et adaptée pour sortir un signal provenant d'une unité de conversion d'échelle d'informations de tension (802) vers l'unité de commande (110) dans le mode de simulation, et
une unité de conversion d'échelle d'informations de tension (802) qui est adaptée pour admettre le signal d'entrée provenant de l'unité d'entrée de signal (112) et la valeur de conversion d'échelle provenant de l'unité opérationnelle (111), pour multiplier le signal d'entrée provenant de l'unité d'entrée de signal (112) par la valeur de conversion d'échelle (111) provenant de l'unité opérationnelle (111), et pour sortir les informations de tension converties selon une échelle qui en résultent vers l'unité de commutation d'informations de tension (801).

2. Dispositif de conversion de puissance selon la revendication 1, dans lequel l'unité de simulation (109) est en outre configurée de telle sorte que, à titre d'alternative à la valeur analogique interne qui est changée en convertissant un signal d'entrée reçu depuis l'extérieur via l'unité d'entrée de signal (112) à l'aide de la valeur de conversion d'échelle, l'unité de simulation (109) stocke en interne des informations représentant un changement temporel de la valeur analogique interne au préalable, et change la valeur analogique interne à l'aide des informations représentant le changement temporel, par déclenchement du signal d'entrée provenant de l'extérieur.

3. Dispositif de conversion de puissance selon l'une quelconque des revendications 1 ou 2, dans lequel
l'unité d'affichage (113) affiche la valeur analogique interne.

4. Dispositif de conversion de puissance selon l'une quelconque des revendications 1 à 3, dans lequel
lors d'un commutation depuis le mode normal vers le mode de simulation, effectué par l'unité de simulation (109), l'unité d'affichage (113) affiche des informations indiquant que le dispositif de conversion de puissance (100) est désormais entré dans le mode de simulation.
